# EUROPÄISCHE PATENTSCHRIFT

(11) **EP 2 147 146 B1**
(45) Veröffentlichungstag und Bekanntmachung des Hinweises auf die Patenterteilung: **14.08.2013**
(21) Anmeldenummer: 08758079.1
(22) Anmeldetag: 08.05.2008
(51) Int. Cl.: D06N 3/14, D06M 15/564, B64C 3/26, A63H 27/00, C08G 18/08, C08G 18/73, C09D 175/06

(54) **BESPANNGEWEBE FÜR LUFTFAHRZEUGE DER ALLGEMEINEN LUFTFAHRT**
COVERING FABRIC FOR AIRCRAFT IN GENERAL AIR TRAVEL
TISSU D'ENTOILAGE POUR UN AÉRONEF DE L'AVIATION GÉNÉRALE

(30) Priorität: 11.05.2007 EP 07090097; 31.03.2008 WO PCT/DE2008/000569
(43) Veröffentlichungstag der Anmeldung: 27.01.2010
(73) Patentinhaber: Lanitz, Siegfried, 04178 Leipzig (DE)
(72) Erfinder: Lanitz, Siegfried, 04178 Leipzig (DE)
(74) Vertreter: Boeckh, Tobias
(86) Internationale Anmeldenummer: PCT/DE2008/000836
(87) Internationale Veröffentlichungsnummer: WO 2008/138331

(56) Entgegenhaltungen:
- WO-A-96/14208
- DE-C- 849 051
- GB-A- 2 215 746
- US-A1- 2006 084 336

## Beschreibung

Die Erfindung betrifft ein Bespanngewebe für Luftfahrzeuge der allgemeinen Luftfahrt sowie ein Verfahren zur Bespannung entsprechender Luftfahrzeuge mit dem Gewebe.

Nach wie vor werden im Flugzeugbau der allgemeinen Luftfahrt und beim Bau ferngelenkter Luftfahrzeuge zur Reduktion des Gewichts Konstruktionen verwendet, bei denen der gesamte Flugkörper oder Teile davon aus einer Konstruktion aus Holmen und Rippen gefertigt ist. Diese können aus Metallen, Holz und/oder Kunststoff bestehen und müssen bespannt werden. Bei der Bespannung handelt es sich vorzugsweise um Folien oder Gewebe, welche auf die Struktur aufgebracht werden.

Ein zur Bespannung von Flugzeugen geeignete Folie offenbart die WO 96/14208 A1. Dabei handelt es sich um ein Mehrschichtmaterial bestehend aus einer Polyester-Trägerfolie, auf die eine Polymerschicht auf Basis eines Polyurethanpolymers aufgebracht ist sowie einer Haftklebeschicht, die auf der Seite, welche der Trägerfolie abgewandt ist, auf die Polymerschicht aufgebracht wird. Diese Druckschrift offenbart eine Folie zur Bespannung von Flugzeugkonstruktionen und kein Gewebe, welche zur Bespannung geeignet ist.

Die US 20060084336 A1 offenbart ein mehrschichtiges, flexibles Bespanngewebe für Flugzeugkonstruktionen. Dieses Gewebe ist aus laminierten Schichten aufgebaut und zeichnet sich durch eine besonders niedrige Gaspermeabilität aus. Dadurch ist dieses Gewebe insbesondere für den Bau von Zeppelinen vorgesehen. Weiterhin sind zur Verwendung für Flugzeuge Bespanngewebe aus Leinen, Baumwolle oder Polyester bekannt. Diese werden mit Nitrozellulosekleber oder Chlorkautschukkleber auf zu bespannende Teile eines Luftfahrzeuges aufgebracht und anschließend erfolgt nach der Trocknung des Klebers eine Spannung des Gewebes. Dabei werden Polyestergewebe mit Hitze geschrumpft und mit Spannlack eingestrichen. Nach diversen Spannlackaufträgen werden noch ein bis zwei silberne Lackschichten zum UV-Schutz aufgetragen. Abschließend wird der Decklack beschichtet.

In der DE 849 051 ist eine Bespannung von Flugzeugen offenbart, welche aus mindestens zwei übereinanderliegenden, mit ihren Kettfäden im Winkel zueinander verlaufenden Gewebestoffbahnen besteht. Dabei wird jede Gewebestoffbahn für sich aufgespannt und diese werden durch eine Behandlung mit Harzen vereinigt. Die Gewebestoffbahnen werden mit lösungsmittelhaltigen Imprägnierungen behandelt und nach dem Aufspannen der Bahnen werden diese mit Spannlack behandelt.

Nachteilig bei den aus dem Stand der Technik bekannten Geweben und deren Verfahren zur Verarbeitung ist, dass bei Verwendung von Polyestergewebe die Gewebefasern zwar vom Nitrozellulosekleber umhüllt werden, dieser sich mit der Faser jedoch nicht verbindet.

Zudem härten Nitrozellulosekleber und -lacke mit der Zeit immer weiter aus und es tritt eine Versprödung der gesamten Verklebung und Bespannung ein. Dadurch wird die Bespannung gegen mechanische Beschädigungen anfällig und es können sogar Teile der Bespannung ohne Fremdeinwirkung abfallen. Letztlich wird bei den aus dem Stand der Technik bekannten Lösungen für die Bespannung eines Flugzeugs nach einigen Jahren eine Neubespannung erforderlich.

Ein weiterer Nachteil an den aus dem Stand der Technik bekannten Lösungen zur Bespannung eines Flugzeuges liegt in der unkontrollierten Gewichtszunahme durch die diversen Farbanstriche und Schichten, die aufgebracht werden. So wurden bei der Verwiegung eines Quadratmeters eines Gewebes aus dem Stand der Technik Grammaturschwankungen von 100 bis 400 g/m² gemessen.

Weiterhin sind aus dem Flugmodellbau Polyestergewebe mit Oberflächenbeschichtung auf Lösemittelbasis bekannt, wobei der heißsiegelfähige Klebstoff rückseitig aufgetragen ist. Die Beschichtung kann gemäß der GB 2 215 746 A aus einer Harzlösung aus Polyurethan oder einem PVC/PVA Kopolymer bestehen, wobei dem Harz neben vernetzenden Agenzien und Katalysatoren Farbstoffe oder Metallpigmente zugesetzt sein können. Zudem sind für Luftfahrzeuge Polyestergewebe mit einer Oberflächenbeschichtung auf Lösemittelbasis bekannt, die sich durch hohe Festigkeit, aber geringen Schrumpf und geringe Weiterreißresistenz auszeichnen. Verklebt werden diese Produkte durch thermoaktivierbare Kleber, die den Nachteil haben, dass sie bei großer Hitze erweichen können und die Bespannung dadurch an Spannkraft verliert und sogar faltig werden kann, bzw. auf dem Kleber zu schwimmen beginnt, was die Gebrauchseigenschaft erheblich einschränkt.

Ausgehend von diesem Stand der Technik ist es Aufgabe der vorliegenden Erfindung ein Bespannmaterial für Flugzeuge zur Verfügung zu stellen, welches die Nachteile des Stands der Technik vermeidet.

Die erfindungsgemäße Aufgabe wird durch die Merkmale der unabhängigen Ansprüche gelöst.

Erfindungsgemäß ist dazu ein Bespanngewebe für Luftfahrzeuge der allgemeinen Luftfahrt vorgesehen, bestehend aus einem Polyester- oder einem Poly-Ether-Ether-Keton-Gewebe, wobei das Gewebe mit einer vernetzten hitzebeständigen anionisch aliphatischen Polyesterpolyurethan-Dispersion beschichtet ist, wobei, die Dispersion mindestens ein elektrisch leitfähiges Pigment als Zusatz umfasst, und/oder, dass eine zusätzliche Schicht aufgebracht ist, die mindestens ein elektrisch leitfähiges Pigment umfasst, und/oder, dass eine zusätzliche Schicht aufgebracht ist, bestehend aus einem elektrisch leitfähigen Material.

Die Beschichtung ist in einer bevorzugten Ausführungsform durch Vernetzung einer anionisch aliphatischen Dispersion mit einer bevorzugten OH-Zahl < 0,5 mit einem hydrophilen aliphatischen Polyisocyanat vorzugsweise auf der Basis von Hexamethylendiisocyanat mit einem bevorzugten NCO-Wert von 17 bis 18 hergestellt worden.

Ein derart beschichtetes erfindungsgemäßes Bespanngewebe weist im Sinne der vorläufigen Erfindung eine erste Beschichtung auf. Auf diese erste Beschichtung können noch weitere Beschichtungen aufgebracht werden und eine derartige Beschichtung kann im Sinne der vorliegenden Erfindung als Grundbeschichtung beschrieben werden.

Ein weiterer Gegenstand der vorliegenden Erfindung ist ein Bespanngewebe für Luftfahrzeuge der allgemeinen Luftfahrt, bestehend aus einem Polyester- oder einem Poly-Ether-Ether-Keton - Gewebe, wobei das Gewebe aus Fasern oder Filamenten, bzw. Ringgarnen, Filamentgarnen oder Zwirnen gewebt ist, die zuvor mit einer vernetzten hitzebeständigen anionisch aliphatischen Polyesterpolyurethan-Dispersion beschichtet worden sind, und, dass eine zusätzliche Schicht aufgebracht ist, die mindestens ein elektrisch leitfähiges Pigment umfasst, und/oder dass eine zusätzliche Schicht aufgebracht ist, bestehend aus einem elektrisch leitfähigen Material.

Die Beschichtung der Fasern oder Filamente, bzw. Ringgarnen, Filamentgarnen oder Zwirnen ist in einer bevorzugten Ausführungsform durch Vernetzung einer anionisch aliphatischen Dispersion mit einer bevorzugten OH-Zahl < 0,5 mit einem hydrophilen aliphatischen Polyisocyanat vorzugsweise auf der Basis von Hexamethylendiisocyanat mit einem bevorzugten NCO-Wert von 17 bis 18 hergestellt worden.

Das erfindungsgemäße Bespanngewebe wird dadurch gekennzeichnet, dass eine zusätzlich eine Schicht vorhanden sein kann, die mit elektrisch leitfähigen Pigmenten zur Ableitung elektrostatischer Aufladungen versehen ist und/oder es wird eine zusätzliche Schicht aus einem leitfähigen Material aufgebracht. In beiden Fällen liegt der Ohmsche Wert der elektrisch leitfähigen Schicht bevorzugt zwischen 10⁻⁷ und 10⁻⁸ Ω. Durch derartige Schichten ist es möglich elektrische Ladungen abzuleiten, ohne dass es zu Beschädigungen der bespannten Teile kommt. Insbesondere kann so Blitzeinschlägen vorgebeugt oder elektrostatische Aufladungen können abgeleitet werden. Die Erfindung umfasst aber auch den Zusatz leitfähiger Pigmente zur Grundbeschichtung.

Im Sinne der vorliegenden Erfindung können Fasern oder Filamente vor der Verwebung zu Ringgarnen, Filamentgarne oder Zwirnen verarbeitet werden. Für einen Fachmann ist es offensichtlich, dass sich die Erfindung auch ausdrücklich auf die Beschichtung der verarbeiteten Fasern oder Filamente bezieht.

Sofern die Fasern oder Filamente bzw. Ringgarne, Filamentgarne oder Zwirne vor dem Webvorgang beschichtet werden, ist erfindungsgemäß vorgesehen, dass der hitzebeständigen anionisch aliphatischen Polyesterpolyurethan-Dispersion Farbpigmente zugesetzt sein können. Es kann auch ausschließlich zur Verwendung einer farbpigmentierten Dispersion kommen. Wobei mit Farbpigmenten im Sinne der vorliegenden Erfindung nicht nur Buntpigmente gemeint sind, sonder auch Farbpräparationen bestehend aus Titandioxyd und Farbstoffen.

Erfindungsgemäß ist somit vorgesehen, dass sowohl mit beschichteten Fasern oder Filamenten, bzw. Ringgarnen, Filamentgarnen oder Zwirnen ein Gewebe hergestellt wird, als auch die Beschichtung eines Gewebes aus schon beschichteten oder unbeschichteten Fasern oder Filamenten, bzw. Ringgarnen, Filamentgarnen oder Zwirnen erfolgt. Dabei ist jeweils bei der Beschichtung der Zusatz von Farbpigmenten, Hydrophobiermitteln, UV-Schutz und/oder Mitteln zu Erschwerung der Entflammbarkeit vorgesehen.

In einer alternativen Ausgestaltung des erfindungsgemäßen Bespanngewebes ist vorgesehen, dass die anionisch aliphatische Dispersion pigmentiert ist. Bevorzugt ist, dass die Pigmentierung aus Aluminium-Partikeln besteht oder weitere Additive zur Stabilisierung des Gewebes gegen UV-Strahlung oder sonstige Strahlung enthält, da diese geeignet sind, die Alterung des Gewebes zu beschleunigen. Weiterhin ist vorgesehen, dass der Beschichtung bei Polyestergewebe zusätzlich Hydrophobiermittel zugesetzt sind.

Weist die Grundbeschichtung den Zusatz von Aluminium-Partikeln, Additiven zur UV-Stabilisierung und Hydrophobiermittel auf, so handelt es sich aufgrund der protektiven Zusätze im Sinne der vorliegenden Erfindung um eine langlebige Beschichtung. Eine derartige Beschichtung ist besonders widerstandsfähig gegen Alterungsprozesse durch Umwelteinflüsse.

In einer Weiterbildung des erfindungsgemäßen Bespanngewebes ist vorgesehen, dass wenigstens eine, vorzugsweise zwei zusätzliche Schichten als Farbschicht auf das Gewebe aufgetragen sind, wobei diese bevorzugt aus einer anionisch aliphatischen Polyesterpolyurethan-Dispersion, wie oben beschrieben, bestehen und der Dispersion zusätzlich Farbpigmente zugesetzt sind.

Ein derart beschichtetes Bespanngewebe weist demnach eine erste Beschichtung (Grundbeschichtung) und eine zweite Beschichtung auf, die Farbpigmente enthält. Die zweite Beschichtung wird im Sinne der vorliegenden Erfindung auch als Farbschicht bezeichnet.

Ist eine ableitfähige Schicht in der Bespannung vorhanden, müssen nach dem Bespannen an den äußeren Enden des Luftfahrzeuges (Übergangsbereich Endleiste/Randbogen und auch Querruder, sowie Höhenleitwerk/Höhenruder und gegebenenfalls Seitenleitwerk/Seitenruder) Ableitstäbe gegen Luft angebracht werden. Dabei ist darauf zu achten, dass die ableitfähige Schicht am Verbindungspunkt zu dem jeweiligen Ableitstab freigelegt wird und eine innige Verbindung zwischen ableitfähiger Schicht und Ableitstab gewährleistet ist. Dieses kann z.B. durch Zuhilfenahme von Kupferleitpaste erfolgen. Die Ableitstäbe werden zweckmäßigerweise in Abströmrichtung von der Unterseite angebracht.

Weiterhin ist ein Bespanngewebe vorgesehen, auf das eine Deckschicht aufgebracht ist. Diese besteht aus einer anionisch aliphatischen Polyesterpolyurethan-Dispersion wie bereits beschreiben und ist mit UV-Blockern oder -Absorbern und/oder Hydrophobiermitteln versehen.

Erfindungsgemäß ist demnach ein Bespanngewebe vorgesehen, das optional - abhängig von dem Verwendungszweck - mehrere Schichten aufweist, wobei nicht zwingend alle Schichten auf das Bespanngewebe aufgebracht sein müssen und eine einzelne Schicht durch mehrfachen Auftrag der entsprechenden Zusammensetzung erhalten werden kann. Um die Haftfähigkeit der aufzubringenden Schichten zum Gewebe zu erhöhen, sieht die vorliegende Erfindung eine optionale Plasma- bzw. Corona-behandelte Oberfläche des Gewebes vor, auf das die Schichten aufgetragen werden soll. Auch kann die Haftfähigkeit der Schichten untereinander mittels Plasma- bzw. Corona-Behandlung optimiert werden.

Wie bereits für das Gewebe selbst beschrieben, ist auch für die Fasern oder Filamente, bzw. Ringgarne, Filamentgarne oder Zwirne eine Mehrfachbeschichtung vorgesehen und es kann ein Beschichtungsaufbau aus Grundbeschichtung, Farbbeschichtung und/oder Deckbeschichtung vorliegen. Derart beschichtete Fasern oder Filamente, bzw. Ringgarne, Filamentgarne oder Zwirne werden dann erst zu einem Gewebe gewirkt, das auch selbst wieder mit dem eingangs beschriebenen Schichtaufbau versehen werden kann.

Als ein kurzlebiges Bespanngewebe für Luftfahrzeuge im Sinne der vorliegenden Erfindung, ist ein Bespanngewebe vorgesehen, dass aus einem Polyester- oder einem Poly-Ether-Ether-Keton-Gewebe besteht, bei dem das Gewebe ausschließlich mit einer vernetzten und farbpigmentierten hitzebeständigen anionisch aliphatischen Polyesterpolyurethan-Dispersion beschichtet ist, wobei die Beschichtung durch Vernetzung einer anionisch aliphatisch farbpigmentierten Dispersion mit einer bevorzugten OH-Zahl < 0,5 mit einem hydrophilen aliphatischen Polyisocyanat vorzugsweise auf der Basis von Hexamethylendiisocyanat mit einem bevorzugten NCO-Wert von 17 bis 18 hergestellt worden ist.

Auch für ein kurzlebiges Bespanngewebe ist vorgesehen, dass das zu beschichtende Gewebe aus der Beschichtung der Fasern oder Filamente, bzw. Ringgarne, Filamentgarne oder Zwirne des Gewebes vor der Webung mit einer vernetzten farbpigmentierten hitzebeständigen anionisch aliphatischen Polyesterpolyurethan-Dispersion entstehen kann.

Die erfindungsgemäßen Bespanngewebe weisen eine Feinheit von 30 - 350 dtex nach DIN 53830 T3 auf. Dabei ist DIN die Abkürzung für deutsche Industrienorm des deutschen Instituts für Normung e.V.. Diese nationalen Industrienormen können in einem Verzeichnis nachgesehen werden und bilden definierte Standards. Vorliegend wird auf die mit den Nummern bezeichneten Normen Bezug genommen.

Weiter ist erfindungsgemäß vorgesehen, dass die unbeschichtete Grammatur eines erfindungsgemäßen Bespanngewebes nach DIN EN 12127 ein Flächengewicht zwischen 30 g/m² bis 250 g/m² aufweist.

In einer Weiterbildung der Erfindung liegt die Anzahl der Einzelfilamente, aus denen die Fäden bestehen, in Kette und Schuss vorzugsweise zwischen 15 und 80 und die Fadenanzahl nach DIN EN 1049-2 liegt in Kette vorzugsweise bei 15 - 60 und in Schuss bei 15 - 60. Zudem ist vorgesehen, dass bei einem erfindungsgemäßen Bespanngewebe die Kettfäden oder Kett- und Schussfäden geschlichtet sind. Durch die Schlichte werden einzelne parallel liegende Filamente zu kompakten Filamentbündeln vereint, wodurch die Duktilität beeinflusst werden kann.

Zur Erzielung einer hohen Festigkeit des Kettfadens und/oder des Schussfadens eines erfindungsgemäßen Bespanngewebes werden einzelne Filamente des Kettfadens zu Filamentbündeln miteinander verdreht.

Für ein erfindungsgemäßes Bespanngewebe ist vorgesehen, dass der Schrumpf des Gewebes vorzugsweise etwa 10% bei einer bevorzugten Temperatur von 150°C längs und quer beträgt. Durch diese erfindungsgemäße Maßnahme wird eine optimale Verarbeitung des Bespanngewebes ermöglicht.

Es ist erfindungsgemäß vorgesehen, dass der Querschrumpf von vorzugsweise etwa 10 % während der Trocknung der Beschichtung im Trockenkanal durch Verstreckung im Spannrahmen erreicht bzw. gehalten wird.

Weiter ist vorgesehen, dass die Webung als Leinwandbindung oder Ripstop erfolgt.

Die Beschichtung des erfindungsgemäßen Bespanngewebes basiert auf einem wässerigen Polyurethansystem. Diese erfindungsgemäße Maßnahme dient Umweltschutzgründen und führt zur Vermeidung von CO₂-Emissionen während der Produktion. Gleichwohl umfasst die Erfindung aber auch Beschichtungen auf der Basis von lösungsmittelhaltigen Systemen.

In einer bevorzugten Ausführungsform der erfindungsgemäßen Gegenstände besteht das Bespanngewebe aus einer oder mehreren der beschriebenen Beschichtungen, welches zusätzlich mit einem Kleber beschichtet sein können, der aus einem thermoaktivierbareren, wärmevernetzenden Klebstoff auf Basis einer wässrigen, anionischen Dispersion eines hochmolekularen Polyurethans mit einer bevorzugten OH-Zahl < 0,5 mit einer vorzugsweise 15%igen Härterformulierung aus verkapselten Isozyanaten besteht, wodurch bei einer Wärmezufuhr von mehr als 40°C der Polyurethankleber vernetzt wird.

Letztlich ist auch ein Verfahren zur Herstellung eines Bespanngewebes für Luftfahrzeuge der allgemeinen Luftfahrt Gegenstand der Erfindung, wobei ein Polyester- oder Poly-Ether-Ether-Keton - Gewebe mit einer Grundbeschichtung hergestellt wird, indem entweder eine vernetzte hitzebeständige anionisch aliphatische Polyesterpolyurethan-Dispersion durch Vernetzung einer anionisch aliphatischen Dispersion mit einer bevorzugten OH-Zahl < 0,5 mit einem hydrophilen aliphatischen Polyisocyanat vorzugsweise auf Basis von Hexamethylendiisocyanat mit einem bevorzugten NCO-Wert von 17 bis 18 hergestellt wird und anschließend ein Polyester- oder Poly-Ether-Ether-Keton - Gewebe damit beschichtet wird, oder Fasern oder Filamente, bzw. Ringgarne, Filamentgarne oder Zwirne zu einem Polyester- oder Poly-Ether-Ether-Keton - Gewebe verarbeitet werden, die zuvor mit einer vernetzten hitzebeständigen anionisch aliphatischen Polyesterpolyurethan-Dispersion beschichtet worden sind, wobei die Beschichtung durch Vernetzung einer anionisch aliphatischen Dispersion mit einer bevorzugten OH-Zahl < 0,5 mit einem hydrophilen aliphatischen Polyisocyanat vorzugsweise auf der Basis von Hexamethylendiisocyanat mit einem bevorzugten NCO-Wert von 17 bis 18 hergestellt worden ist.

Für das erfindungsgemäße Verfahren ist weiter vorgesehen, dass Gewebe oder die Fasern oder Filamente, bzw. Ringgarne, Filamentgarne oder Zwirne, aus denen das Gewebe hergestellt wurde, ausschließlich mit einer vernetzten und farbpigmentierten hitzebeständigen anionisch aliphatischen Polyesterpolyurethan-Dispersion beschichtet werden können.

Weiterhin, dass Gewebe oder die Fasern oder Filamente, bzw. Ringgarne, Filamentgarne oder Zwirne zusätzlich mit einem Kleber beschichtet werden können, der aus einem thermoaktivierbareren, wärmevernetzenden Klebstoff auf Basis einer wässrigen, anionischen Dispersion eines hochmolekularen Polyurethans bevorzugt mit einer OH-Zahl < 0,5 mit einer vorzugsweise 15%igen Härterformulierung aus verkapselten Isozyanaten besteht.

In einer erfindungsgemäßen Ausgestaltung ist vorgesehen, dass eine pigmentierte anionisch aliphatische Dispersion verwendet werden kann, die vorzugsweise mit Aluminium-Partikeln pigmentiert ist.

Weiter ist erfindungsgemäß vorgesehen, dass bei der Beschichtung des Gewebes zusätzlich Hydrophobiermitteln zugesetzt werden können oder vor Aufbringen der Grundbeschichtung auf Gewebe oder Fasern oder Filament eine Hydrophobierschicht aufgebracht werden kann.

Sofern eine Farbgebung des Bespanngewebes erreicht werden soll, können zusätzlich wenigstens eine, vorzugsweise zwei zusätzliche Schichten als Farbschicht auf Gewebe oder Fasern oder Filamente, bzw. Ringgarne, Filamentgarne oder Zwirne, aus denen das Gewebe hergestellt wird aufgebracht werden. Diese Schichten können auch unterschiedliche Farben aufweisen, so dass ein Muster oder auch Zahlen und Buchstaben als Markierung aufgebracht werden können.

Zur Ableitung von Blitzschlägen oder elektrostatischen Ladungen ist erfindungsgemäß vorgesehen, dass eine zusätzliche Schicht aufgebracht werden kann, vorzugsweise bestehend aus einer anionisch aliphatischen Polyesterpolyurethan-Dispersion gemäß Anspruch 1, die mit mindestens einem elektrisch leitfähigen Pigment versehen wird und/oder eine zusätzliche Schicht, bestehend aus einem elektrisch leitfähigen Material aufgebracht werden kann. Die Ableitung der Ladungen dieser Schicht erfolgt über Ableitstäbe gegen Luft.

Zur Verbesserung der Langlebigkeit der aus dem Herstellungsverfahren resultierenden Bespannung ist vorgesehen, dass eine Deckschicht aufgebracht werden kann, bevorzugt bestehend aus einer anionisch aliphatischen Polyesterpolyurethan-Dispersion gemäß Anspruch 1, die mit UV-Blockern oder -Absorbern und Hydrophobiermitteln versehen ist.

In dem erfindungsgemäßen Verfahren kann bevorzugt ein Gewebe mit einer Feinheit von 30 - 350 dtex nach DIN 53830 T3 verwendet werden. Weiterhin kann dieses eine unbeschichtete Grammatur aufweisen, die nach DIN EN 12127 ein Flächengewicht zwischen 30 g/m² bis 250 g/m² hat, wobei Fäden verwendet können, bei denen die Anzahl der Einzelfilamente, aus denen diese bestehen, in Kette und Schuss zwischen 15 und 80 beträgt.

Bevorzugt kann ein Gewebe verwendet werden, dessen Schrumpf bei einer Temperatur von etwa 150°C längs und quer von vorzugsweise etwa 10% beträgt und/oder bei dem ein Querschrumpf von vorzugsweise etwa 10% durch eine Trocknung der Beschichtung im Trockenkanal durch Verstreckung im Spannrahmen erzielt werden kann.

Um einer Zerstörung des resultierenden Gewebes oder der Strukturen, die mit dem Gewebe bespannt werden, vorzubeugen, ist vorgesehen, dass zusätzlich eine selbstlöschende Schicht aufgebracht werden kann.

Letztlich ist auch ein Verfahren zur Bespannung von Luftfahrzeugen der allgemeinen Luftfahrt, insbesondere Flugzeugen, Gegenstand der vorliegenden Erfindung, wobei das Verfahren durch die Abfolge folgender Verfahrensschritte gekennzeichnet ist:
a. ein erfindungsgemäßes Bespanngewebe nach einem der Ansprüche 1 bis 20 wird in dem Bereich, in dem es mit einer Struktur verklebt werden soll mit einem Kleber aus einem thermoaktivierbareren, wärmevernetzenden Klebstoff auf Basis einer wässrigen, anionischen Dispersion eines hochmolekularen Polyurethans mit einer bevorzugten OH-Zahl < 0,5 mit einer vorzugsweise 15%igen Härterformulierung aus verkapselten Isozyanaten in Kontakt gebracht, wobei auch die Struktur mit dem Kleber beschichtet oder eingestrichen wird, und
b. nach dem Trocknen des Klebers wird das Bespanngewebe auf die Struktur gebügelt, und
c. die Bereiche in denen das Bespanngewebe auf die Struktur gebügelt wurde, werden mittels einer geeigneten Wärmequelle (Bügeleisen) auf etwa 95 - 105°C, vorzugsweise 100°C, erhitzt, und
d. sobald der Kleber erkaltet ist, werden alle bespannten Flächen mittels einer geeigneten Wärmequelle (z.B. Quarzstrahler oder Heißluftgebläse) bei etwa 150°C Oberflächentemperatur gespannt, wobei
e. darauf zu achten ist, dass die Nähte und Überlappungen sowie konkave Teile in diesem Stadium nicht über etwa 100°C Oberflächentemperatur erhitzt werden, um eine Aktivierung des Klebers zu verhindern, wodurch sich sonst Nähte und Bespannungen an konkaven Teilen lösen können.

Somit ist der Kleber auch für ein separates Beschichten der beschriebenen beschichteten Bespanngewebe vorgesehen. Zur Verarbeitung kann der Kleber auf die zu bespannende Struktur aufgespritzt werden. Dieses kann auch ausschließlich nur in einem Bereich geschehen, in dem das Bespanngewebe mit der Struktur verklebt werden soll.

Nach dem Trocknen wird die Bespannung auf die Struktur gebügelt. Danach werden alle angebügelten Stellen mittels Heißluftgebläse, einer Wärmestrahlungsquelle oder eines Bügeleisens auf ca. 100°C erhitzt, um eine gesicherte Vernetzung des Klebers zu gewährleisten, indem die verkapselten Isocyanate ihren Aggregatszustand ändern und so den Polyurethankleber vernetzen. Nach dem Erkalten des Klebers werden alle bespannten Flächen mittels Heißluftgebläse bzw. Wärmequelle bei ca. 150°C gespannt.

Besonders vorteilhaft an der vorliegenden Erfindung ist, dass das Gewebe aufgrund seiner Beschichtung bereits alle sonst einzeln aufzutragenden Schichten enthält. Der Auftrag vieler Schichten, wie beispielsweise gesonderter Lack- oder Farbschichten entfällt, da das Gewebe bereits mit einer farbpigmentierten Schicht versehen sein kann.

Die Verwendung der beschriebenen Dispersion ermöglicht im Vergleich zu verdampfenden Lösungsmitteln eine umweltfreundliche Bespannung. Die vorliegende Erfindung umfasst aber ausdrücklich auch die Verwendung von Lösungsmittel basierenden Klebern und Beschichtungssystemen.

Durch den erfindungsgemäß verwendeten Kleber wird eine sichere und temperaturunabhängige Verbindung der Bespannung mit der Struktur gewährleistet. Im Gegensatz zu den aus dem Stand der Technik bekannten Lösungen führt eine Temperaturerhöhung nicht dazu, dass der Kleber weich wird, oder das Gewebe Falten schlägt und sogar anfängt auf dem weichen Kleber zu schwimmen.

Die Reaktion des Klebers ist erst bei Temperaturen >100°C reversibel, die nur durch externe Wärmezufuhr erreicht werden können und die Möglichkeit der definierten Entfernung der Bespannung zu Revisions- und Reparaturzwecken ermöglicht. Daher gewährleistet der erfindungsgemäß verwendete Kleber eine dauerhafte Festigkeit.

Im Zusammenhang mit den erfindungsgemäß vorgesehenen Mitteln, welche den Beschichtungen zugesetzt werden, wird der Alterungsprozess des Bespanngewebes beispielsweise durch UV-Strahlung oder andere natürliche Faktoren deutlich verlangsamt.

Bei der Beschichtung des Gewebes ist eine Produktionsanlage mit einem verstellbaren Spannrahmen zu verwenden, damit das Gewebe während der Trocknung quer nachverstreckt werden kann, um die vorzugsweise etwa 10% Querschrumpf zu erhalten bzw. zu erreichen.

Ein weiterer Gegenstand der vorliegenden Erfindung ist ein Kit zur Bespannung von Luftfahrzeugen, enthaltend ein erfindungsgemäßes Bespanngewebe und einen Kleber zur Beschichtung des Gewebes, der aus einem thermoaktivierbareren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten besteht. Zusätzlich können in dem Kit auch Zackenbänder und/oder Verstärkungsbänder enthalten sein.

Ein derartiger Kit bietet alle Mittel, die notwendig sind, um ein Luftfahrzeug, sei es ein Flugzeug oder ein Modellflugzeug mit einem erfindungsgemäßen Bespanngewebe zu bespannen.

Insgesamt führen das erfindungsgemäße Bespanngewebe und die erfindungsgemäße Verklebung dazu, dass deutlich weniger Gewicht auf das zu bespannende Luftfahrzeug aufgebracht wird. Dies ist insbesondere dann vorteilhaft, wenn es sich um kleine oder leichte Flugzeuge, wie ferngelenkte Luftfahrzeuge, unbemannte Aufklärungsflugzeuge, Ultraleichtflugzeuge und Luftfahrzeuge der E-Klasse handelt.

Wesentlich für die Beschichtung eines Gewebes ist, dass die Beschichtung aufgebracht wird und nicht das Gewebe bzw. die Fasern oder Filamente, bzw. Ringgarne, Filamentgarne oder Zwirne des Gewebes durchdringt. Die Beschichtungstiefe des Gewebes soll nur ca. 1/3 der Gewebestärke betragen, um dieses vor dem Eindringen von Wasser oder anderen Flüssigkeiten zu schützen und luftundurchdringlich zu machen.

Ein weiterer Vorteil des oberflächigen Aufliegens der erfindungsgemäßen Beschichtung auf dem Gewebe ist der, dass das Gewebe selbst seine Elastizität behält. In den aus dem Stand der Technik bekannten Verfahren werden die Gewebe mit Harzen getränkt. Dies stellt einen Eingriff in die Struktur der Fasern oder Filamente dar, aus denen das Gewebe besteht. Die Trocknung des Harzes oder anderer Flüssigkeiten mit denen ein Bespanngewebe getränkt wird führt zu einem Verlust an Elastizität des Gewebes. Dadurch steigt die Gefahr von Beschädigungen der Bespannung aufgrund der Kräfte, die im Betrieb an einem Luftfahrzeug auftreten, insbesondere an den Tragflächen. Auch wird die Weitereißfestigkeit durch eine Tränkung negativ beeinflusst.

## Patentansprüche

1. Bespanngewebe für Luftfahrzeuge der allgemeinen Luftfahrt, bestehend aus einem Polyester- oder einem Poly-Ether-Ether-Keton-Gewebe, **dadurch gekennzeichnet, dass** das Gewebe mit einer vernetzten hitzebeständigen anionisch aliphatischen Polyesterpolyurethan-Dispersion beschichtet ist,
wobei,
die Dispersion mindestens ein elektrisch leitfähiges Pigment als Zusatz umfasst, und/oder,
dass eine zusätzliche Schicht aufgebracht ist, die mindestens ein elektrisch leitfähiges Pigment umfasst,
und/oder,
dass eine zusätzliche Schicht aufgebracht ist, bestehend aus einem elektrisch leitfähigen Material.

2. Bespanngewebe für Luftfahrzeuge der allgemeinen Luftfahrt, bestehend aus einem Polyester- oder einem Poly-Ether-Ether-Keton -Gewebe, **dadurch gekennzeichnet, dass** das Gewebe aus Fasern oder Filamenten oder Ringgarnen, Filamentgarnen oder Zwirnen gewebt ist, die zuvor mit einer vernetzten hitzebeständigen anionisch aliphatischen Polyesterpolyurethan-Dispersion beschichtet sind, und,
dass eine zusätzliche Schicht aufgebracht ist, die mindestens ein elektrisch leitfähiges Pigment umfasst,
und/oder
dass eine zusätzliche Schicht aufgebracht ist, bestehend aus einem elektrisch leitfähigen Material.

3. Bespanngewebe nach Anspruch 1 oder 2, **dadurch gekennzeichnet, dass** das Gewebe mit einer oder mehreren zusätzlichen vernetzten hitzebeständigen anionisch aliphatischen Polyesterpolyurethan-Dispersion-Beschichtungen beschichtet ist.

4. Bespanngewebe nach wenigstens einem der vorhergehenden Ansprüche,
**dadurch gekennzeichnet, dass** die Beschichtung durch Vernetzung einer anionisch aliphatischen Dispersion mit einer bevorzugten OH-Zahl < 0,5 mit einem hydrophilen aliphatischen Polysiocyanat vorzugsweise auf der Basis von Hexamethylendiisocyanat mit einem bevorzugten NCO-Wert von 17 bis 18 hergestellt worden ist.

5. Bespanngewebe nach einem der Ansprüche 1 bis 4, **dadurch gekennzeichnet, dass** die hitzebeständige anionisch aliphatische Polyesterpolyurethan-Dispersion Zusätze umfasst, vorzugsweise Farbpigmente, Aluminium-Partikel, UV-Blocker oder-Absorbern, Hydrophobiermittel und/oderMittel zur Erschwerung der Entflammbarkeit.

6. Bespanngewebe nach einem der vorherigen Ansprüche, **dadurch gekennzeichnet, dass** es zusätzlich mit einem Kleber beschichtet ist, der aus einem thermoaktivierbareren, wärmevernetzenden Klebstoff auf Basis einer wässrigen, anionischen Dispersion eines hochmolekularen Polyurethans bevorzugt mit einer OH-Zahl < 0,5 mit einer vorzugsweise 15%igen Härterformulierung aus verkapselten Isozyanaten besteht.

7. Verfahren zur Bespannung von Luftfahrzeugen der allgemeinen Luftfahrt, insbesondere Flugzeugen, durch die Abfolge folgender Verfahrensschritte gekennzeichnet:
a) ein Bespanngewebe nach einem der Ansprüche 1 bis 6 wird in dem Bereich, in dem es mit einer Struktur verklebt werden soll, mit einem Kleber aus einem thermoaktivierbaren, wärmevernetzenden Klebstoff auf Basis einer wässrigen, anionischen Dispersion eines hochmolekularen Polyurethans, bevorzugt mit einer OH-Zahl < 0,5, mit einer vorzugsweise 15%igen Härterformulierung aus verkapselten Isozyanaten in Kontakt gebracht, wobei auch die Struktur mit dem Kleber beschichtet wird, und
b) nach dem Trocknen des Klebers wird das Bespanngewebe auf die Struktur gebügelt, und
c) die Bereiche in denen das Bespanngewebe auf die Struktur gebügelt wurde, werden mittels einer geeigneten Wärmequelle auf 95 - 105°C erhitzt, und
d) sobald der Kleber erkaltet ist, werden alle bespannten Flächen mittels einer geeigneten Wärmequelle bei 150°C Oberflächentemperatur gespannt, wobei
e) die Nähte und Überlappungen sowie konkave Teile in diesem Stadium nicht über 100°C Oberflächentemperatur erhitzt werden, um eine Aktivierung des Klebers zu verhindern, wodurch sich sonst Nähte und Bespannungen an konkaven Teilen lösen können.

8. Kit zur Bespannung von Luftfahrzeugen der allgemeinen Luftfahrt, enthaltend ein Bespanngewebe nach einem der Ansprüche 1 bis 6 und einen Kleber zur Beschichtung des Gewebes, der aus einem thermoaktivierbareren, wärmevernetzenden Klebstoff auf Basis einer wässrigen, anionischen Dispersion eines hochmolekularen Polyurethans mit einer bevorzugten OH-Zahl < 0,5 mit einer vorzugsweise 15%igen Härterformulierung aus verkapselten Isozyanaten besteht, wodurch bei einer Wärmezufuhr von mehr als 40°C der Polyurethankleber vernetzt wird.

9. Kit nach Anspruch 8, der zusätzlich Zackenbänder und/oder Verstärkungsbänder enthält.

## Claims

1. Covering fabric for aircraft in general aviation, consisting of a polyester- or poly-ether-ether-ketone-fabric, **characterised in that** the fabric is coated with a crosslinked heat-resistant anionic aliphatic polyester-polyurethane dispersion, whereby the dispersion comprises of at least one pigment as an additive capable of electrical conduction and/or that an additional layer is applied which comprises at least one pigment capable of electrical conduction and/or that an additional layer is applied which consists of a material capable of electrical conduction.

2. Covering fabric for aircraft in general aviation, consisting of a polyester- or poly-ether-ether-ketone-fabric, **characterised in that** the fabric is woven from fibers or filaments or ring yarns, filament yarns or twine, that are coated beforehand with a crosslinked heat-resistant anionic aliphatic polyester-polyurethane dispersion and that an additional layer is applied which comprises at least one pigment capable of electrical conduction and/or that an additional layer is applied which consists of a material capable of electrical conduction.

3. Covering fabric according to claim 1 or 2, **characterised in that** the covering fabric is coated additionally with one or more crosslinked heat-resistant anionic aliphatic polyester-polyurethane dispersion layers.

4. Covering fabric for aircraft according to at least one of the preceding claims, **characterised in that** the coating is produced though crosslinking an anionic aliphatic dispersion with a preferred OH-number < 0.5, with a hydrophilic aliphatic polyisocyanate, preferably based on hexamethylene diisocyanate with a preferred NCO-value of 17 to 18.

5. Covering fabric according to one of claims 1 to 4, **characterised in that** the heat-resistant anionic aliphatic polyester-polyurethane dispersion comprises additives, preferably colour-pigments, aluminium-particles, UV-blockers or absorbers, hydrophobic substances and/or means to ensure the hinderance of flammability.

6. Covering fabric according to one of the preceding claims, **characterised in that** the fabric is additionally coated with an adhesive, which consists of a thermo-activatable, heat-crosslinked adhesive substance based on an aqueous anionic dispersion of a high molecular weight polyurethane, preferably with an OH-number < 0.5, and preferably comprising a 15% hardening-formulation made of encapsulated isocyanates.

7. Method for coating aircraft in general aviation, especially aeroplanes, **characterised by** the following method steps:
a) A covering fabric according to one of claims 1 to 6 is brought into contact with an adhesive in the area where it is to be attached to a structure, the adhesive comprising a thermo-activatable, thermal-crosslinking adhesive substance based on an aqueous anionic dispersion of a high molecular weight polyurethane, preferably with an OH-number < 0.5 with preferably 15% hardening-formulation made of encapsulated isocyanates, whereby the structure is also coated with the adhesive, and
b) After drying the adhesive the covering fabric is ironed onto the structure, and
c) The areas in which the covering fabric is ironed onto the structure are heated by means of a suitable heat-source to 95 - 100°C,
d) when the adhesive has cooled, all covered areas are tensed by means of a suitable heat-source at 150°C surface temperature, whereby
e) the seams and overlaps, in addition to concave pieces, are at this stage not heated over 100°C surface temperature, in order to prevent activation of the adhesive, through which otherwise the seams and overlaps could release themselves from the concave pieces.

8. Kit for covering aircraft in general aviation, comprising a covering fabric according to one of claims 1 to 6 and an adhesive for coating the fabric, which is made of a thermo-activatable, heat-crosslinked adhesive substance based on an acqueous anionic dispersion of a high molecular weight polyurethane with a preferred OH-number < 0.5 with a preferred 15% hardening-formulation made of encapsulated isocyanates, whereby the polyurethane adhesive is crosslinked by supplying heat of more than 40°C.

9. Kit according to claim 8, which additionally comprises serrated bands and/or reinforcement bands.

## Revendications

1. Tissu d'entoilage pour aéronefs de l'aviation générale, se composant d'un tissu en polyester ou en polyétheréthercétone, **caractérisé en ce que** le tissu est revêtu d'une dispersion de polyester-polyuréthane aliphatique anionique thermorésistante réticulée,
dans lequel,
la dispersion comprend au moins un pigment électriquement conducteur en tant qu'additif,
et/ou,
**en ce qu'**une couche supplémentaire est appliquée, qui comprend au moins un pigment électriquement conducteur,
et/ou,
**en ce qu'**une couche supplémentaire est appliquée, se composant d'un matériau électriquement conducteur.

2. Tissu d'entoilage pour aéronefs de l'aviation générale, se composant d'un tissu en polyester ou en polyétheréthercétone, **caractérisé en ce que** le tissu est tissé à partir de fibres ou de filaments ou de fils continus à anneaux, de fils continus ou de fils forts, qui sont au préalable revêtus d'une dispersion de polyester-polyuréthane aliphatique anionique thermorésistante réticulée, et,
**en ce qu'**une couche supplémentaire est appliquée, qui comprend au moins un pigment électriquement conducteur,
et/ou
**en ce qu'**une couche supplémentaire est appliquée, se composant d'un matériau électriquement conducteur.

3. Tissu d'entoilage selon la revendication 1 ou 2, **caractérisé en ce que** le tissu est revêtu d'un ou plusieurs revêtements de dispersion de polyester-polyuréthane aliphatique anionique thermorésistante réticulée.

4. Tissu d'entoilage selon au moins l'une des revendications précédentes, **caractérisé en ce que** le revêtement est obtenu par réticulation d'une dispersion aliphatique anionique avec un indice OH préféré < 0,5 avec un polyisocyanate aliphatique hydrophile de préférence à base de diisocyanate d'hexaméthylène avec une valeur NCO de 17 à 18.

5. Tissu d'entoilage selon l'une des revendications 1 à 4, **caractérisé en ce que** la dispersion de polyester-polyuréthane aliphatique anionique thermorésistante comprend des additifs, de préférence des pigments colorés, des particules d'aluminium, des agents bloquant ou absorbant les UV, des produits imperméabilisants et/ou des produits compliquant l'inflammabilité.

6. Tissu d'entoilage selon l'une des revendications précédentes, **caractérisé en ce qu'**il est en outre recouvert d'une colle qui se compose d'un adhésif thermoréticulable, thermoactivable à base d'une dispersion anionique aqueuse d'un polyuréthane de poids moléculaire élevé avec un indice OH < 0,5 avec une formulation de durcisseur de préférence à 15 % constituée par des isocyanates encapsulés.

7. Procédé d'entoilage d'aéronefs de l'aviation générale, en particulier des avions, **caractérisé par** la succession des étapes de procédé suivantes :
a) un tissu d'entoilage selon l'une des revendications 1 à 6, dans la zone dans laquelle il doit être collé à une structure, est mis en contact avec une colle constituée par un adhésif thermoréticulable, thermoactivable à base d'une dispersion anionique aqueuse d'un polyuréthane de poids moléculaire élevé, de préférence avec un indice OH < 0,5 avec une formulation de durcisseur de préférence à 15 % constituée par des isocyanates encapsulés, la structure étant également revêtue avec la colle, et
b) après le séchage de la colle, le tissu d'entoilage est appliqué sur la structure par repassage, et
c) les zones dans lesquelles le tissu d'entoilage a été appliqué sur la structure par repassage sont chauffées au moyen d'une source de chaleur appropriée à 95-105°C, et
d) dès que la colle est refroidie, toutes les surfaces entoilées sont tendues au moyen d'une source de chaleur appropriée à une température de surface de 150°C, où
e) les coutures et les chevauchements ainsi que les parties concaves ne sont pas chauffées à une température de surface de plus de 100°C à ce stade, afin d'empêcher une activation de la colle, moyennant quoi autrement les coutures et les entoilages peuvent se défaire au niveau des parties concaves.

8. Nécessaire pour l'entoilage d'aéronefs de l'aviation générale, contenant un tissu d'entoilage selon l'une des revendications 1 à 6 et une colle pour le revêtement du tissu, qui est constituée par un adhésif thermoréticulable, thermoactivable à base d'une dispersion anionique aqueuse d'un polyuréthane de poids moléculaire élevé possédant un indice OH préféré < 0,5 avec une formulation de durcisseur de préférence à 15 % constituée par des isocyanates encapsulés, moyennant quoi lors d'un apport de chaleur de plus de 40°C l'adhésif de polyuréthane est réticulé.

9. Nécessaire selon la revendication 8, qui contient en outre des bandes en zigzag et/ou des bandes de renfort.
